# EUROPÄISCHE PATENTSCHRIFT

(11) **EP 2 278 159 B1**
(45) Veröffentlichungstag und Bekanntmachung des Hinweises auf die Patenterteilung: **14.03.2012**
(21) Anmeldenummer: 10180650.3
(22) Anmeldetag: 24.04.2002
(51) Int. Cl.: F03D 7/02, H01H 19/62

(54) **Windenergieanlage mit einer eine Betätigungswelle aufweisenden Schaltvorrichtung**
Wind turbine with switchgear comprising an actuating shaft
Éolienne comprenant und dispositif d'interrupteur pourvu d'un arbre d'actionnement

(30) Priorität: 07.06.2001 DE 10127454
(43) Veröffentlichungstag der Anmeldung: 26.01.2011
(62) Teilanmeldung aus: 02740497.9
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner

(56) Entgegenhaltungen:
- EP-A- 0 942 168
- DE-A1- 3 930 821
- DE-U- 9 013 386
- DE-U- 29 520 792
- GB-A- 555 439
- US-A- 4 962 290

## Beschreibung

Die vorliegende Erfindung betrifft eine Schaltvorrichtung mit einer Betätigungswelle, einem Betätiger, wenigstens einem Schalter und einem Gehäuse.

Solche Schaltvorrichtungen sind insbesondere in der Form von Nockenschaltern allgemein bekannt und werden in verschiedensten Geräten und für verschiedenste Aufgaben eingesetzt. Dabei sind ein oder mehrere Nockenscheiben auf einer Betätigungswelle angeordnet. Diese Nockenscheiben zeichnen sich insbesondere dadurch aus, dass ihr äußerer Umfang an wenigstens einer Stelle von einer kreisrunden Form abweicht und entweder ein Nocken-Tal, also einen verringerten Abstand des äußeren Umfangsrandes zu der Betätigungswelle, oder einen Nocken-Berg, also einen vergrößerten Abstand des Umfangsrandes zu der Betätigungswelle, aufweist.

Ein auf einem solchen Umfang einer derartig ausgebildeten Nockenscheibe entlang laufender Betätigungshebel für einen Schalter oder eine Kontaktfeder selbst, welcher in der Radialrichtung der Nockenscheibe ein weiterer Kontakt gegenüber liegt, kann nun durch die Nockenscheibe betätigt werden und damit einen Schaltvorgang auslösen.

Abhängig vom Anwendungsfall kann eine einzelne Nockenscheibe vorgesehen sein, die bei einer vollständigen Rotation einen oder mehrere Schalter betätigt. Alternativ können auf einer Welle auch mehrere voneinander beabstandete Nockenscheiben vorgesehen sein, die dann natürlich mehrere Schalter entsprechend der Ausbildung von Nocken-Tälern und/oder Nocken-Bergen betätigen können. Auf diese Weise lassen sich mehrere unterschiedliche Schalter in vorgegebener Relation zueinander automatisch betätigen.

Bei diesen bekannten Nocken-Schaltern ist es jedoch nachteilig, dass z. B. in Folge von unvermeidbaren Toleranzen die Präzision solcher Schaltwerke nicht beliebig steigerbar ist und häufig ein Konflikt zwischen der Forderung nach hoher Präzision und gleichzeitig geringer Einbaugröße besteht.

Aufgabe der vorliegenden Erfindung ist es daher, eine Schaltvorrichtung der eingangs genannten Art derart weiterzubilden, dass die Schaltgenauigkeit und die Auflösung, also die sichere Differenzierungsmöglichkeit zwischen zwei verschiedenen Schaltpositionen, verbessert werden.

Der Erfindung liegt dabei die Erkenntnis zu Grunde, dass die Auflösung gerade bei einer Rotationsbewegung insbesondere von der Länge des Kreisbogenabschnittes während der Rotation und damit vom äußeren Umfang der Nockenscheibe abhängig ist.

Erfindungsgemäß wird daher eine Schaltvorrichtung der eingangs genannten Art weitergebildet durch wenigstens eine Kulisse als Betätiger, welche mit einem ersten Kulissenabschnitt mit der Betätigungswelle verbunden ist und mit einem zweiten Kulissenabschnitt die Betätigungswelle in einem vorgegebenen Abstand mindestens teilweise umfasst, wobei auf der konvexen Seite des zweiten Kulissenabschnittes eine Betätigungsbahn für den/die Schalter ausgebildet ist, indem an wenigstens einer vorgegebenen Position der Abstand zwischen dem äußeren Umfangsrand und der Betätigungswelle für ein vorgegebenes Bogenmaß größer ist, als an anderen Positionen des zweiten Kulissenabschnittes.

Durch diesen Aufbau bestimmt der Abstand des zweiten Kulissenabschnittes von der Betätigungswelle den Radius des Betätigers und somit auch den Bogenabschnitt, um welchen sich der Betätiger bei einer Drehung der Betätigungswelle um ein vorgegebenes Maß weiterbewegt. Da der Zusammenhang zwischen Radius und Umfang eines Kreises linear ist, steigt die Länge des Bogenabschnittes für einen vorgegebenen Winkel in dem gleichen Maße wie der Radius.

In einer bevorzugten Ausführungsform der Erfindung weist der zweite Kulissenabschnitt eine vorgegebene Länge parallel zur Betätigungswelle auf, und mehrere über diese Länge verteilt nebeneinander angeordnete Betätigungsbahnen für mehrere Schalter. Auf diese Weise genügt eine geeignet ausgebildete Kulisse mit dementsprechend auch nur einer Befestigung auf der Betätigungswelle zum Betätigen mehrerer Schalter in einer vorgebbaren Weise.

Besonders bevorzugt werden bei der vorliegenden Erfindung handelsübliche Schalter verwendet, die an einer ersten Tragplatte angebracht werden. Dadurch kann z. B. eine Montage der Schalter auf der Platte und eine Verdrahtung der Schalter vor dem Einbau in die Schaltvorrichtung vorgenommen werden, so dass die Tragplatte mit den daran montierten Schaltern schließlich als eine Baugruppe in die Schaltvorrichtung einfügbar ist.

Alternativ oder zusätzlich zu mechanischen Schaltern können elektronische Schalter eingesetzt werden. Diese elektronischen Schalter sind allgemein für eine höhere Anzahl von Schaltspielen ausgelegt als mechanische Schalter und haben somit eine höhere Ausfallsicherheit. Durch redundantes Vorsehen mechanischer und elektronischer Schalter kann somit die Betriebssicherheit der Schaltvorrichtung erheblich gesteigert werden. Eine geeignete Anordnung der Schalter kann dabei die Baugröße der Schaltvorrichtung begrenzen.

In einer insbesondere bevorzugten Weiterbildung der Erfindung ist die Betätigungswelle durch die Grundplatte des Gehäuses hindurch geführt, so dass diese Betätigungswelle von außen drehbar ist. An dem gehäuseinnenseitigen Ende der Betätigungswelle kann ein Drehgeber angeordnet sein, der die Position der Welle In vorgebbarer Weise unabhängig von der Betätigung eines Schalters oder mehrerer Schalter darstellt.

Um den Drehgeber möglichst frei von mechanischen Beanspruchungen betreiben zu können, ist in einer besonders bevorzugten Ausführungsform der Erfindung die Drehgeberwelle als Betätigungswelle für den Drehgeber von der Betätigungswelle für die Kulisse getrennt ausgebildet. Zum Verwirklichen einer axiale und radiale Kräfte aufnehmenden, aber torsionssteifen Verbindung werden die Betätigungswelle und die Drehgeberwelle bevorzugt durch eine Federbalgkupplung verbunden.

In einer bevorzugten Ausführungsform ist dieser Drehgeber ein Potentiometer und führt zu einem sehr einfachen Aufbau. Alternativ kann der Drehgeber ein Inkrementalgeber sein, der z. B. als eigenständige Baugruppe in die Schaltvorrichtung integriert ist und die Rotationsinformation geeignet kodiert und die kodierte Information ausgibt. Auf diese Weise kann die Position der Welle kontinuierlich ermittelt werden und die Schalter können zusätzlich in vorgebbaren Positionen unabhängig von dem Drehgeber über die Kulisse gesteuert bestimmte Schaltvorgänge auslösen. Dadurch ist z. B. auch eine Sicherheitsschaltung verwirklichbar, die selbst bei Ausfall des Drehgebers noch eine Auslösung bestimmter Schaltvorgänge beim Erreichen bestimmter Winkelpositionen ermöglicht.

Durch eine vorgegebene Mindest-Wandstärke der Abdeckhaube , eine insbesondere scherfeste Verbindung zwischen der Abdeckhaube und der Grundplatte und natürlich eine geeignete Befestigung der Schaltvorrichtung wird eine ausreichend hohe Belastbarkeit erreicht, um z. B. auch in der Einbausituation einer kurzzeitigen hohen Scherbelastung wie einem seitlichen Schlag und/oder einem versehentlichen Betreten schadlos standzuhalten.

Ein dichter Sitz der Abdeckhaube auf der Grundplatte verhindert das Eindringen von Feuchtigkeit in das Innere der Schaltvorrichtung. Dadurch ist ein zuverlässiger Dauerbetrieb möglich. Natürlich kann zwischen der Grundplatte und der Abdeckhaube eine Dichtung vorgesehen sein. Dabei kann die Befestigung der Abdeckhaube an der Grundplatte so erfolgen, dass die Dichtung zwischen der Abdeckhaube und der Grundplatte angeordnet und durch die Abdeckhaube vorgespannt ist.

Weitere vorteilhafte Ausführungsformen der Erfindung sind in den Unteransprüchen angegeben.

Im Folgenden wird ein Ausführungsbeispiel anhand der Figuren näher erläutert.

Dabei zeigen:
- Figur 1: eine vereinfachte Draufsicht auf die Grundplatte einer erfindungsgemäßen Schaltvorrichtung in einer ersten Ausführungsform;
- Figur 2: eine Seitenansicht einer offenen, erfindungsgemäßen Schaltvorrichtung in der ersten Ausführungsform;
- Figur 3: eine vereinfachte Draufsicht auf die Grundplatte einer erfindungsgemäßen Schaltvorrichtung in einer zweiten Ausführungsform;
- Figur 4: eine Seitenansicht einer offenen, erfindungsgemäßen Schaltvorrichtung in der zweiten Ausführungsform;
- Figur 5: eine vereinfachte Draufsicht auf die Grundplatte einer erfindungsgemäßen Schaltvorrichtung in einer dritten Ausführungsform;
- Figur 6: eine Seitenansicht einer offenen, erfindungsgemäßen Schaltvorrichtung in der dritten Ausführungsform;
- Figur 7: eine Seitenansicht einer offenen, erfindungsgemäßen Schaltvorrichtung in einer vierten Ausführungsform;
- Figur 8: eine Ansicht einer Grundplatten-Außenseite;
- Figur 9: eine Übersichtsskizze der erfindungsgemäßen Regelung; und
- Figur 10: eine Ansicht der erfindungsgemäßen Ausführung.

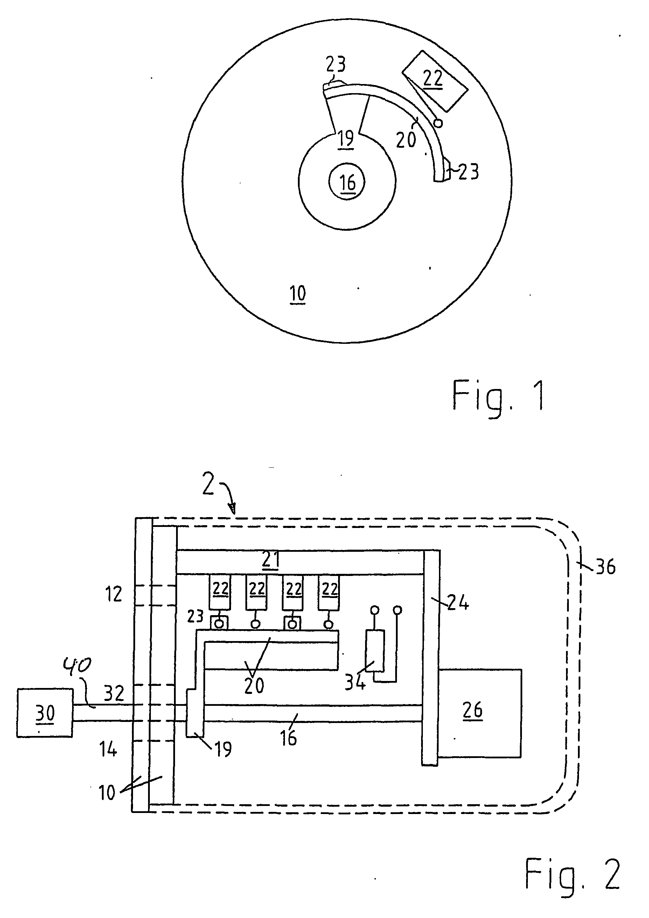

In Figur 1 ist im Zentrum der Grundplatte 10 eine Betätigungswelle 16 dargestellt; die Position der Betätigungswelle 16 kann alternativ exzentrisch sein. Diese Betätigungswelle tritt durch die Grundplatte 10 hindurch und kann von der vom Betrachter abgewandten Seite der Grundplatte 10 aus betätigt werden.

An der Betätigungswelle 16 ist ein erster Kulissenabschnitt 19 befestigt. Diese Befestigung kann z. B. formschlüssig erfolgen, so dass eine Rotation der Betätigungswelle 16 stets den ersten Kulissenabschnitt 19 mitnimmt.

Der erste Kulissenabschnitt 19 ist über einen in der Figur oberhalb der Betätigungswelle 16 dargestellten Steg mit einem zweiten Kulissenabschnitt 20 verbunden. Dieser zweite Kulissenabschnitt 20 weist an vorgegebenen Positionen Nocken-Berge auf. An der konvexen Seiten dieses zweiten Kulissenabschnittes 20 ist weiterhin ein Schalter 22 dargestellt, der in einem Gehäuse angeordnet ist und einen Betätigungshebel aufweist, der einen geringen Abstand zu der Oberfläche des zweiten Kulissenabschnittes 20 aufweist. Dabei ist der Abstand zwischen dem Betätigungshebel des Schalters 22 und dem zweiten Kulissenabschnitt 20 geringer als die Höhe der beiden Nocken-Berge 23 gegenüber dem dazwischen liegenden Teil des zweiten Kulissenabschnittes 20.

Durch eine Rotation der Betätigungswelle 16 wird der erste Kulissenabschnitt 19 mitgenommen und damit bewegt sich auch der zweite Kulissenabschnitt 20 unter dem Betätigungshebel des Schalters 22 entlang. Sobald einer der Nocken-Berge 23 den Betätigungshebel des Schalters 22 erreicht, wird dieser Betätigungshebel zu dem Schalter 22 hin bewegt und der Schalter 22 wird betätigt. Auf diese Weise kann eindeutig erfasst werden, dass die Betätigungswelle 16 eine vorbestimmte Position erreicht hat.

Dreht die Betätigungswelle 16 nun in der entgegengesetzten Richtung, dreht sich der Nocken-Berg 23 unter dem Betätigungshebel des Schalters 22 heraus, und der Schalter 22 kann wieder in seine Ruhelage zurückkehren. Damit ist auch eine entgegengesetzte Drehung der Betätigungswelle 16 eindeutig erkennbar.

In Figur 2 ist eine Seitenansicht einer offenen, erfindungsgemäßen Schaltvorrichtung dargestellt. Eine Grundplatte 10 weist einen Lagersitz 14 auf, durch welchen die Betätigungswelle 16 geführt ist. Dabei kann die Betätigungswelle 16 beispielsweise in einer Kugeldrehverbindung als Lager 32 gelagert sein. Weiterhin weist die Grundplatte 10 eine Durchgangsöffnung 12 als Kabeldurchführung auf, durch welche Verbindungskabel aus der im Betrieb geschlossenen Schaltvorrichtung heraus geführt werden können. Zum dichten Verschließen dieser Kabeldurchgangsöffnungen 12 können Stopfbuchsen verwendet werden, die allgemein bekannt sind und daher nicht näher beschrieben werden.

In dieser Figur ist der Bereich rechts von der Grundplatte der Bereich, der bei der endmontierten Schaltvorrichtung von einer (gestrichelt dargestellten) Abdeckhaube 36 abgedeckt wird und damit das Innere der Schaltvorrichtung bildet, während der Bereich links von der Grundplatte 10 außerhalb des Gehäuses der Schaltvorrichtung liegt.

Es ist leicht erkennbar, dass die Betätigungswelle 16 sich eine vorgegebene Länge außerhalb des Gehäuses erstreckt und in einer Verbindungsmuffe 30 endet. Über diese Verbindungsmuffe 30 ist die Betätigungswelle 16 mit einer weiteren Welle verdrehsicher verbindbar, deren Rotationsposition festgestellt werden soll.

An der Innenseite der Grundplatte 10 ist auf der Betätigungswelle 16 ein erster Kulissenabschnitt 19 einer Kulisse so angeordnet, dass er zuverlässig bei der Rotation der Betätigungswelle 16 mitgenommen wird. Dieses kann z. B. durch eine formschlüssige Verbindung erreicht werden.

Mit dem ersten Kulissenabschnitt 19 ist ein zweiter Kulissenabschnitt 20 verbunden, der sich in dem vorliegenden Ausführungsbeispiel in einem vorgegebenen Abstand kreissegmentförmig konzentrisch um die Betätigungswelle 16 herum erstreckt (siehe insbes. Fig. 1 ). Dabei ist die Länge dieses zweiten Kulissenabschnittes 20 so bemessen, dass sich über die Länge mehrere Betätigungsbahnen verteilen, die mehrere nebeneinander angeordnete Schalter 22 getrennt voneinander betätigen können.

An der Grundplatte 10 ist weiterhin eine erste Tragplatte 21 derart befestigt, dass sie sich parallel zu der Betätigungswelle 16 in einem vorgegebenen Abstand davon erstreckt. An dieser ersten Tragplatte 21 sind mehrere Schalter 22 nebeneinander mit einem solchen Abstand befestigt, dass der Betätigungshebel eines jeden Schalters 22 einer bestimmten Betätigungsbahn des zweiten Kulissenabschnittes 20 gegenübersteht. Durch eine Rotation der Betätigungswelle 16 wird der erste Kulissenabschnitt 19 und damit auch der zweite Kulissenabschnitt 20 entsprechend mitgenommen und auf dem zweiten Kulissenabschnitt 20 an vorgegebenen Positionen vorgesehene Nocken-Berge 23 betätigen die Schalter 22 (vergleiche insbesondere Figur 1).

An der Grundplatten-abgewandten Seite der ersten Tragplatte 21 ist senkrecht dazu eine zweite Tragplatte 24 angebracht. Diese zweite Tragplatte 24 trägt einen Inkrementalgeber 26.

Dieser Inkrementalgeber 26 ist wiederum mit der Betätigungswelle 16 verbunden und gibt die Rotationsposition der Betätigungswelle 16 als ein geeignet kodiertes, elektrisches Signal aus.

Die Rotation der Betätigungswelle 16 beeinflusst stets direkt den Inkrementalgeber 26, so dass dieser jede Rotation der Welle in Form elektrischer Signale erkennbar macht. Unabhängig von dem Inkrementalgeber können bestimmte, vorgebbare Rotationspositionen der Betätigungswelle 16 durch die Betätigung von Schaltern 22 erkannt werden, da die Position von Nocken-Bergen 23 auf der Betätigungsbahn des zweiten Kulissenabschnittes 20 eine entsprechende Betätigung der Schalter 22 unabhängig von dem Inkrementalgeber 26 ermöglicht.

Um übermäßige Schwankungen in den Betriebsbedingungen dieser Schaltvorrichtung auszugleichen, kann z. B. ein Heizwiderstand 34 vorgesehen sein, der bei Bedarf eingeschaltet wird und durch Umwandlung von elektrischer Energie in Wärme den Innenraum der Schaltvorrichtung aufzuheizen.

Die Anbringung der (in dieser Figur gestrichelt dargestellten) Abdeckhaube 36 an der Grundplatte 10 kann z. B. erfolgen, indem die Abdeckhaube 36 im Grundplatten-nahen Bereich ein Innengewinde aufweist, welches mit einem entsprechenden Außengewinde an der Grundplatte 10 verschraubbar ist. Alternativ können (aus Gründen der Übersichtlichkeit nicht dargestellte) Gewindestangen vorgesehen sein, die sich von der Grundplatte 10 aus parallel zu der Betätigungswelle 16 über den Inkrementalgeber 26 hinaus erstrecken. In einem solchen Fall kann die Abdeckhaube 36 an der Grundplatten-abgewandten Seite Bohrungen aufweisen, durch welche diese Gewindestangen eine vorgegebene Länge hindurch ragen, so dass von außen Muttern aufgeschraubt werden können, welche die Abdeckhaube in ihren Sitz auf der Grundplatte 10 pressen.

Weiterhin kann die (ebenfalls nicht dargestellte) Befestigung der Abdeckhaube 36 durch Schrauben am Umfang der Abdeckhaube 36 erfolgen, die z. B. entweder in radialer Richtung der Schaltvorrichtung in entsprechende Gewindebohrungen der Grundplatte 10 eingreifen oder durch die Grundplatte 10 hindurch in axialer Richtung in geeignet ausgebildete Gewinde in der Abdeckhaube 36 eingreifen.

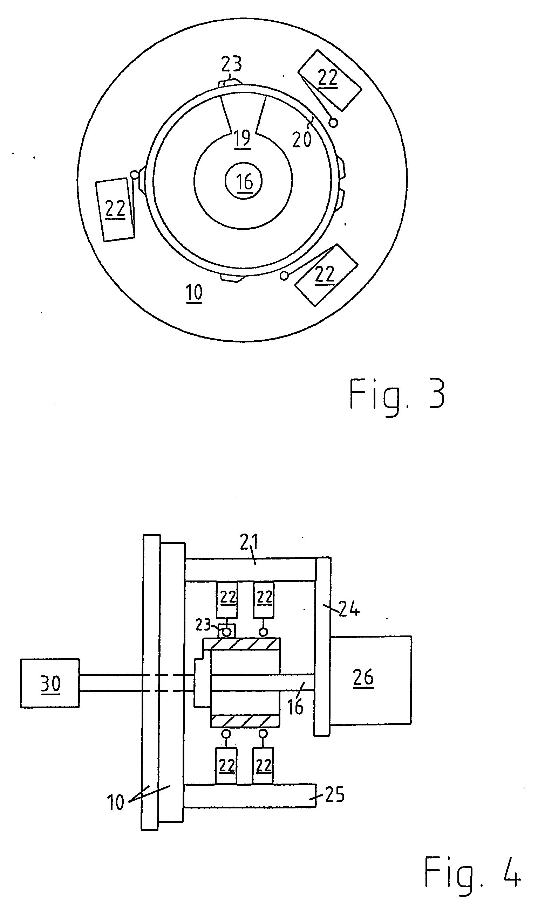

Figur 3 zeigt eine vereinfachte Draufsicht der Grundplatte einer zweiten Ausführungsform einer erfindungsgemäßen Schaltvorrichtung und Figur 4 zeigt eine Seitenansicht dieser Ausführungsform. Da auch dieser und den nachfolgend erläuterten Ausführungsformen das gleiche Prinzip wie der ersten Ausführungsform zu Grunde liegt, werden insbesondere die Unterschiede gegenüber der ersten Ausführungsform aufgezeigt.

Der wesentliche Unterschied besteht bei dieser zweiten Ausführungsform darin, dass der zweite Kulissenabschnitt 20 die Betätigungswelle 16 vollständig umschließt. Dabei verläuft die Ebene der von dem zweiten Kulissenabschnitt 20 umschlossenen Fläche radial zu der Betätigungswelle 16.

Abhängig von dem vorgesehenen maximalen Drehwinkel der Schaltvorrichtung sind über den Außenumfang gleichförmig beabstandet Schalter 22 angeordnet. In dem dargestellten Beispiel übersteigt der Drehwinkel nicht 120° und somit können drei Schalter 22 über den Umfang verteilt werden (siehe insbes. Figur 3). Diese Anordnung gestattet also einen kompakteren Aufbau einer erfindungsgemäßen Schaltvorrichtung. Dabei ist in Figur 4 eine Anordnung mit einer dritten Tragplatte 25 dargestellt, auf welcher zwei Schalter 22 angeordnet sind.

Der jeweilige Schaltzeitpunkt ergibt sich aus der Position der Nocken-Berge 23. Bei zwei in der Figur 3 dargestellten Schalter 22 sind zwei Nocken-Berge 23 vorgesehen, so dass diese Schalter 22 in beiden Rotationsrichtungen gegen Ende des Rotationsweges, jedoch an verschiedenen Positionen und damit zu verschiedenen Zeitpunkten, betätigt werden. Der dritte, in der Figur links dargestellte Schalter, ist in betätigtem Zustand gezeigt. Der Nocken-Berg 23 hat den Betätigungshebel an den Schalter 22 heran gedrückt und damit den Schaltvorgang bewirkt. Dabei wird dieser Schalter 22 etwa in der Mitte des Rotationsweges unabhängig von der Rotationsrichtung betätigt. Natürlich sind beliebige andere Kombinationen denkbar.

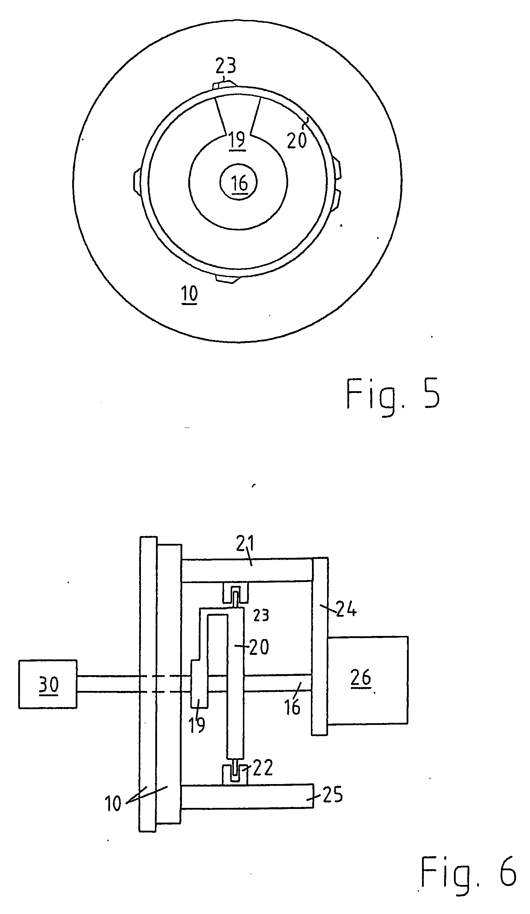

In den Figuren 5 und 6 ist eine weitere Ausführungsform dargestellt, bei welcher an Stelle mechanischer Schalter 22 optische Schalter, z. B. in Form von Gabellichtschranken, verwendet werden. In Figur 5 ist erkennbar, dass der zweite Kulissenabschnitt 20 die Betätigungswelle 16 wiederum vollständig umschließt. In Figur 6 zeigt die Seitenansicht, dass die zum Auslösen der Schaltspiele vorgesehenen Nocken-Berge hier deutlich schmaler sein können, als dies für eine sichere Betätigung mechanischer Schalter erforderlich ist.

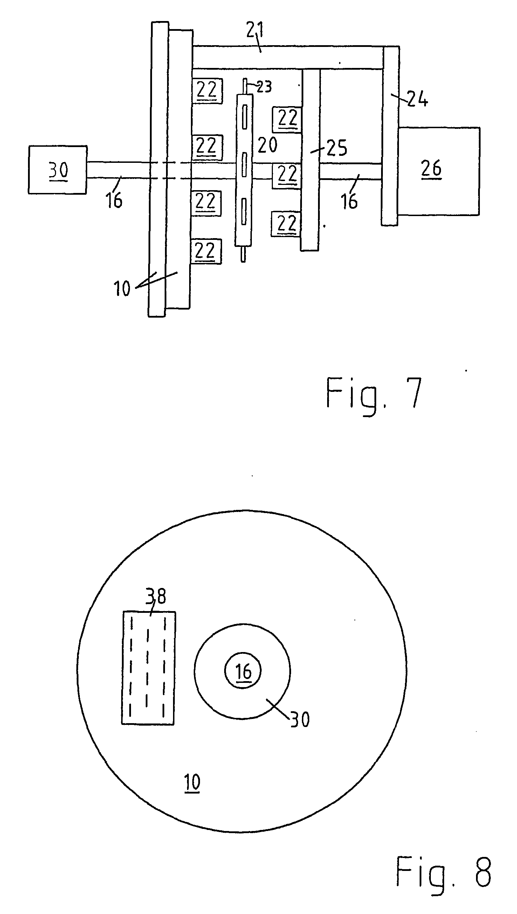

Figur 7 zeigt eine Seitenansicht einer vierten Ausführungsform der erfindungsgemäßen Schaltvorrichtung. An Stelle von Gabellichtschranken werden hier Reflexkoppler als Schalter 22 eingesetzt, um wiederum auf optischem Wege entsprechende Signale zu erzeugen. Um im Falle eines Nocken-Tales eine gegenseitige Beeinflussung der Schalter 22 zu vermeiden, sind diese in zwei Ebenen, jedoch derart versetzt zueinander angeordnet, dass sich nicht zwei Schalter 22 gegenüberliegen. Auf diese Weise lässt sich durch geeignete Auswahl der Position von Nocken-Bergen und Nocken-Tälern der Aufbau einer erfindungsgemäßen Schaltvorrichtung noch kompakter gestalten.

Die Wirkungsweise eines Reflexkopplers als Schalter 22 unterscheidet sich dabei von der Wirkungsweise einer Gabellichtschranke. Bei der Gabellichtschranke sind Sender und Empfänger in den sich gegenüberliegenden Schenkeln getrennt untergebracht. Solange kein Nocken-Berg 23 diese Strecke unterbricht, ist der Schaltvorgang ausgelöst. Befindet sich ein Nocken-Berg 23 zwischen Sender und Empfänger, ist die optische Verbindung und damit auch der Schaltvorgang unterbrochen. Bei einem Reflexkoppler befinden sich Sender und Empfänger auf der gleichen Seite. Sobald ein Nocken-Berg 23 vor dem Reflexkoppler steht, wird das vom Sender abgestrahlte Licht durch den Nocken-Berg 23 reflektiert und löst im Empfänger den Schaltvorgang aus. Steht kein Nocken-Berg 23 vor dem Reflexkoppler, wird das vom Sender abgestrahlte Licht nicht reflektiert und der Schaltvorgang ist unterbrochen.

Selbstverständlich ist auch die Verwendung von Schaltern auf der Basis andere physikalischer Wirkungen wie Hall-Sensoren, Reed-Kontakten, usw. möglich. Weiterhin ist eine Kombination mechanischer und elektronischer Schalter 22 sinnvoll, wenn die Sicherheit gesteigert werden soll. Bei Ausfall eines mechanischen Schalters kann das Signal des elektronischen Schalters immer noch den gewünschten Vorgang auslösen und gleichzeitig kann aus dem Unterschied der Signale beider Schalter (nämlich z. B. durch das Ausbleiben des Signales des mechanischen Schalters) eine Funktionsstörung erkannt und deren Beseitigung eingeleitet werden, ohne dass die grundsätzliche Funktionsfähigkeit der Schaltvorrichtung leidet.

Um ein eindeutiges Schaltverhalten zu erzielen, kann jeder Schalter eine Hysterese zwischen Einschalt- und Ausschalt-Punkt aufweisen. Je nach Art des Schalters kann diese Hysterese mechanisch (z. B. durch Sprung-Schalter) und/oder elektronisch (z. B. durch Schmitt-Trigger) erzeugt werden. Weiterhin kann eine Vorrichtung vorgesehen sein, die insbesondere die Plausibilität der Schaltsignale, z. B. durch den Vergleich paralleler Schalter und/oder eine vorgegebene Betätigungsfolge, prüft und bei Bedarf eine entsprechende Signalisierung auslöst. Diese Vorrichtung kann z. B. diskrete und/oder integrierte digitale Schaltungen und insbesondere einen Mikrocontroller bzw. einen Mikroprozessor enthalten.

Weiterhin sind in Figur 7 der erste Kulissenabschnitt 19 und der zweite Kulissenabschnitt 20 in die gleiche radiale Ebene gelegt und bilden somit in der Seitenansicht eine Einheit.

Figur 8 zeigt die Ansicht der Außenseite einer Grundplatte 10 mit der zentral dargestellten Betätigungswelle 16 und der diese umschließenden Verbindungsmuffe 30. Neben dieser Verbindungsmuffe 30 ist ein Steckverbinder 38 vorgesehen. Dieser Steckverbinder 38 ist fest montiert und durch einen entsprechenden (jedoch nicht dargestellten) Durchbruch in der Grundplatte 10 von der Innenseite der Schaltvorrichtung mit den elektrischen Anschlüssen belegt. Ein Auswechseln der Schaltvorrichtung kann dadurch ohne das gleichzeitige Auswechseln der Anschlusskabel für die Schaltvorrichtung und vice versa erfolgen und vereinfacht so den Arbeitsablauf.

In dem dargestellten Ausführungsbeispiel ist der Steckverbinder ein dreireihiger, 14-poliger Steckverbinder. Die dargestellten Kontakte ähneln sogenannten Messerkontakten, wobei der Steckverbinder sowohl als Buchse wie auch als Stecker ausgebildet sein kann. Selbstverständlich ist die Ausführungsform auch nicht auf Messerkontakte beschränkt. Vielmehr kann jede geeignete Art von Steckerverbinder verwendet werden.

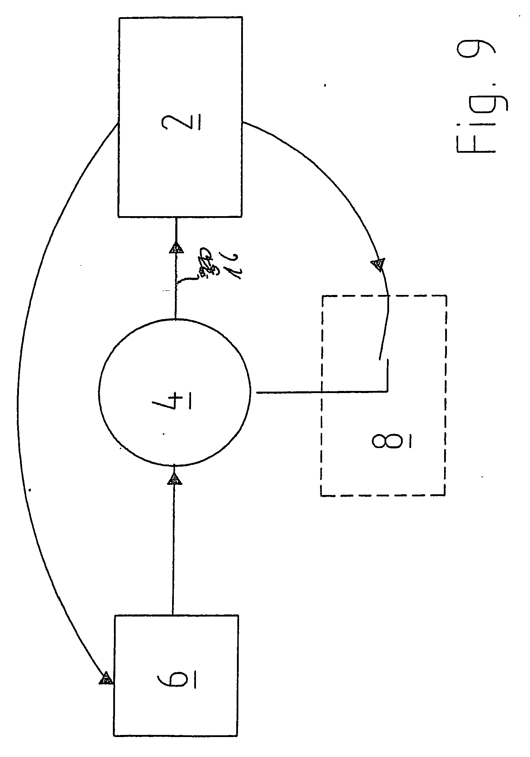

Figur 9 zeigt die Zusammenschaltung zwischen einer Steuerung 6 eines Rotorblattes, des Antriebs zur (Pitch-)Verstellung des Rotorblattes sowie des Kompaktendschalters 2 und der von dem Kompaktendschalter gesteuerten Schaltvorrichtung 8, die auch als Schütz ausgebildet ist. Wie zu erkennen, wird der Antrieb zur Verstellung des Rotorblattes von der Steuereinrichtung gesteuert. Diese gibt dem Rotorblatt seine Winkelausrichtung vor, die sich je nach Windverhältnissen auf das durch die Steuerung vorgegebene Optimum richtet. Für den Fall einer Abschaltung der Anlage kann das auch bedeuten, dass das Rotorblatt in die sogenannte Fahnenstellung bewegt wird. Wie ferner zu erkennen, steuert das Rotorblatt über die Betätigungswelle 16 die Position des bogenförmigen Abschnitts 20 des Schalters 2. Kommt hierbei einer der Vorsprünge 23 des Schalters 2 in Kontakt mit dem Schalter 22, wird hierüber die Schaltfunktion der Schaltvorrichtung 8 ausgelöst und der Antrieb abgeschaltet. Die Steuervorrichtung 6 erhält ebenfalls ein Signal von dem Kompaktendschalter 2 und kann dem gemäß den Antrieb 4 in der gewünschten Art und Weise so steuern, dass eine Beschädigung des Rotorblattes unterbleibt.

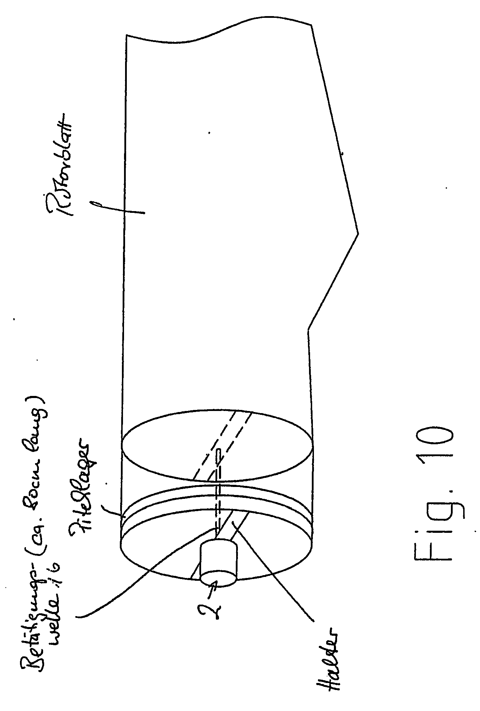

Figur 10 zeigt die Anordnung des Schalters 2 in Verbindung mit dem Rotorblatt. Hierbei ist zu sehen, dass der Endschalter 2 an einer Halterungseinrichtung auf einer Seite des Pitchlagers angeordnet ist (und bei Bewegung des Rotorblattes stets still steht). Über die Betätigungswelle 16 ist der Schalter 2 wiederum mit einer entsprechenden Halterung am Ende der Welle 16 mit dem Rotorblatt verbunden. Dreht sich das Rotorblatt, so führt dies automatisch zu einer entsprechenden Verdrehung der Welle und einer entsprechenden Schalterstellung im Kompaktendschalter 2.

Gemäß einem Beispiel der Erfindung wird eine Drehgeberwelle vorgesehen, welche mit der Betätigungswelle 16 durch eine Kupplung verbunden ist.

Gemäß einem weiteren Beispiel der Erfindung weist die Schaltvorrichtung eine Grundplatte 10 auf, durch welche die Betätigungswelle 16 hindurchgeführt ist.

Gemäß einem weiteren Aspekt der vorliegenden Erfindung erstreckt sich die Betätigungswelle 16 eine vorgegebene Länge auf der Kulissen-abgewandten Seite der Grundplatte 10 und endet in einer Verbindungsmuffe 30.

Gemäß einem weiteren Aspekt der vorliegenden Erfindung weist die Schaltvorrichtung eine zweite Tragplatte 24 auf, an welcher der Drehgeber 26 befestigt ist.

Gemäß einem weiteren Aspekt der vorliegenden Erfindung weist die Schaltvorrichtung eine Führung wenigstens eines Anschlusskabels durch einen Kabeldurchgang 12 in der Grundplatte 10 auf.

Gemäß einem weiteren Aspekt der vorliegenden Erfindung weist die Schaltvorrichtung wenigstens einen an der Außenseite der Schaltvorrichtung befestigen Steckverbinder 38 auf.

Gemäß einem weiteren Aspekt der vorliegenden Erfindung weist die Schaltvorrichtung eine einstückig ausgebildete Abdeckhaube 36 mit einer durch die Grundplatte 10 verschließbaren Öffnung auf.

Gemäß einem weiteren Aspekt der vorliegenden Erfindung weist die Schaltvorrichtung einen dichten Sitz der Abdeckhaube 36 auf der Grundplatte 10 auf.

Gemäß einem weiteren Aspekt der vorliegenden Erfindung weist die Schaltvorrichtung eine vorgegebene minimale Wandstärke der Abdeckhaube 36 und eine insbesondere scherfeste Verbindung zwischen der Grundplatte 10 und der Abdeckhaube 36 auf.

## Patentansprüche

1. Windenergieanlage, mit
mindestens einem Rotorblatt und mindestens einer Schaltvorrichtung, wobei die Schaltvorrichtung aktiviert wird, wenn die Schaltvorrichtung eine bestimmte Schaltposition eingenommen hat, wobei die Schaltvorrichtung eine Betätigungswelle aufweist, die mit dem Rotorblatt starr verbunden ist, die Schaltvorrichtung ferner einen Betätiger aufweist und wenigstens einen Schalter enthält, wobei der Betätiger und der Schalter in einem Gehäuse untergebracht sind und der Betätiger als wenigstens durch eine Kulisse ausgebildeter Betätiger ausgebildet ist, welcher mit einem ersten Kulissenabschnitt mit der Betätigungswelle verbunden ist.

2. Windenergieanlage nach Anspruch 1,
**dadurch gekennzeichnet, dass** die Schaltvorrichtung einen zweiten Kulissenabschnitt (20) aufweist, der die Betätigungswelle in einem vorgegebenen Abstand mindestens teilweise bogenförmig und/oder kreisförmig umfasst, wobei der bogenförmige und/oder kreisförmige Abschnitt mit seiner Innenseite der Betätigungswelle zugerichtet ist und auf seiner Außenseite Vorsprünge aufweist, die bei Bewegung und einer entsprechenden Positionierung mit dem Schalter zusammenwirken.

3. Windenergleanlage nach Anspruch 2,
**dadurch gekennzeichnet, dass** durch die Vorsprünge (23) ein Kulissenabschnitt gebildet ist, welcher als Betätigungsbahn für den und/oder die Schalter (22) ausgebildet ist, indem an wenigstens einer vorgegebenen Position der Abstand zwischen dem äußeren Umfangsrand der Vorsprünge (23) die Vorsprünge einen Teil des Schalters berühren.

4. Windenergieanlage nach einem der vorstehenden Ansprüche,
**gekennzeichnet durch** einen die Betätigungswelle (16) vollständig umschließenden zweiten Kulissenabschnitt (20).

5. Windenergieanlage nach einem der vorstehenden Ansprüche,
**gekennzeichnet durch** eine Mehrzahl von Schaltern (22) entlang der Bewegungsrichtung und/oder der Länge des zweiten Kulissenabschnittes (20).

6. Windenergieanlage nach einem der vorstehenden Ansprüche,
**gekennzeichnet durch** mehrere über die Länge des zweiten Kulissenabschnittes (20) nebeneinander angeordnete Betätigungsbahnen für mehrere Schalter (22).

7. Windenergieanlage nach einem der vorstehenden Ansprüche,
**dadurch gekennzeichnet, dass** wenigstens ein Schalter (22) ein elektronischer Schalter ist.

8. Windenergieanlage nach einem der vorstehenden Ansprüche,
**gekennzeichnet durch** eine an der Grundplatte (10) angebrachte erste Tragplatte (21), welche den/die Schalter (22) trägt.

9. Windenergieanlage nach einem der vorstehenden Ansprüche, **gekennzeichnet durch** einen mittels der Betätigungswelle (16) betätigten Drehgeber (26).

10. Windenergieanlage nach Anspruch 9,
**gekennzeichnet durch** eine gemeinsame Welle (16) für die Kulisse (19, 20) und den Drehgeber (26).

11. Windenergieanlage nach einem der Ansprüche 9 bis 10,
**dadurch gekennzeichnet, dass** der Drehgeber (26) als Inkrementalgeber oder Potentiometer ausgebildet ist.

12. Windenergieanlage nach einem der vorstehenden Ansprüche,
**gekennzeichnet durch** eine Führung der Betätigungswelle (16) **durch** die Grundplatte (10) hindurch mit einem Lager (32).

13. Windenergieanlage nach einem der vorstehenden Ansprüche,
**gekennzeichnet durch** einen Heizwiderstand (34) innerhalb des **durch** die Grundplatte (10) und einer Abdeckhaube (36) gebildeten Innenraumes der Schaltvorrichtung.

14. Windenergieanlage nach Anspruch 1,
**gekennzeichnet durch** einen Rotor mit wenigstens einem Rotorblatt, wobei die Schaltvorrichtung ausgebildet ist, einen Pitch des Rotorblatts zu erfassen.

15. Windenergieanlage nach Anspruch 14,
**dadurch gekennzeichnet, dass** die Betätigungswelle (16) der Schaltvorrichtung zur Erfassung des Pitches derart mit dem Rotorblatt gekoppelt ist, dass eine Änderungen des Pitches des Rotorblattes eine Rotation der Betätigungswelle (16) bewirkt.

16. Windenergieanlage nach Anspruch 14 oder 15,
**gekennzeichnet durch** eine Pitchregelung, die als Messglied die Schaltvorrichtung (2) aufweist und ausgebildet ist, den Pitch des Rotorblattes zu regeln.

17. Windenergieanlage nach Anspruch 16,
**dadurch gekennzeichnet, dass** die Pitchregelung einen Regler (6) und als Stellglied einen Pitchantrieb (4) aufweist.

## Claims

1. A wind power installation having
at least one rotor blade and at least one switching device, wherein the switching device is activated when the switching device has assumed a given switching position, wherein the switching device has an actuating shaft which is rigidly connected to the rotor blade, the switching device further has an actuator and includes at least one switch, wherein the actuator and the switch are accommodated in a housing and the actuator is in the form of an actuator which is formed at least by a motion link and which is connected to the actuating shaft by a first motion link portion.

2. A wind power installation according to claim 1,
**characterised in that** the switching device has a second motion link portion (20) that at least partially surrounds the actuating shaft in an arcuate and/or circular shape at a predetermined distance, wherein the arcuate and/or circular portion faces with its inside towards the actuating shaft and on its outside has projections which, on movement and corresponding positioning, cooperate with the switch.

3. A wind power installation according to claim 2,
**characterised in that** there is formed by the projections (23) a motion link portion that is configured as an actuating track for the switch and/or switches (22) by virtue of the fact that at at least one predetermined position the distance between the outer peripheral edge of the projections (23) the projections touch a part of the switch.

4. A wind power installation according to any one of the preceding claims,
**characterised by** a second motion link portion (20) that completely encircles the actuating shaft (16).

5. A wind power installation according to any one of the preceding claims,
**characterised by** a plurality of switches (22) along the direction of movement and/or along the length of the second motion link portion (20).

6. A wind power installation according to any one of the preceding claims,
**characterised by** a plurality of actuating tracks for a plurality of switches (22), which tracks are arranged in juxtaposed relationship over the length of the second motion link portion (20).

7. A wind power installation according to any one of the preceding claims,
**characterised in that** at least one switch (22) is an electronic switch.

8. A wind power installation according to any one of the preceding claims,
**characterised by** a first carrier plate (21) which is mounted on the base plate (10) and which carries the switch or switches (22).

9. A wind power installation according to any one of the preceding claims,
**characterised by** a rotary encoder (26) actuated by means of the actuating shaft (16).

10. A wind power installation according to claim 9,
**characterised by** a common shaft (16) for the motion link (19, 20) and the rotary encoder (26).

11. A wind power installation according to either of claims 9 and 10,
**characterised in that** the rotary encoder (26) is in the form of an incremental encoder or a potentiometer.

12. A wind power installation according to any one of the preceding claims,
**characterised by** a guiding of the actuating shaft (16) through the base plate (10) with a bearing (32).

13. A wind power installation according to any one of the preceding claims,
**characterised by** a heating resistor (34) within the interior of the switching device, which interior is formed by the base plate (10) and a cover hood (36).

14. A wind power installation according to claim 1,
**characterised by** a rotor having at least one rotor blade, wherein the switching device is configured to detect a pitch of the rotor blade.

15. A wind power installation according to claim 14,
**characterised in that**, for detecting the pitch, the actuating shaft (16) of the switching device is coupled to the rotor blade in such a manner that a change in the pitch of the rotor blade causes a rotation of the actuating shaft (16).

16. A wind power installation according to claim 14 or 15,
**characterised by** a pitch regulating system which has the switching device (2) as a measuring element and which is configured to regulate the pitch of the rotor blade.

17. A wind power installation according to claim 16,
**characterised in that** the pitch regulating system has a regulator (6) and, as an adjustment element, a pitch drive (4).

## Revendications

1. Eolienne comportant
au moins une pale de rotor et au moins un dispositif de commutation, dans laquelle le dispositif de commutation est activé lorsque le dispositif de commutation a pris une position définie de commutation, le dispositif de commutation présentant un arbre d'actionnement, qui est raccordé de manière rigide à la pale de rotor, le dispositif de commutation présentant en outre un actionneur et au moins un commutateur, l'actionneur et le commutateur étant placés dans un boîtier et l'actionneur étant configuré comme au moins un actionneur configuré en coulisseau relié par un premier segment de coulisseau à l'arbre d'actionnement.

2. Eolienne selon la revendication 1,
**caractérisée en ce que** le dispositif de commutation présente un deuxième segment de coulisseau (20) qui entoure l'arbre d'actionnement à distance prédéterminée au moins partiellement en forme d'arc de cercle et/ou en forme de cercle, le segment en forme d'arc de cercle et/ou en forme de cercle ayant son côté intérieur orienté vers l'arbre d'actionnement et présentant sur son côté extérieur des saillies qui coopèrent avec le commutateur en cas de déplacement et d'un positionnement correspondant.

3. Eolienne selon la revendication 2,
**caractérisée en ce que** les saillies (23) forment un segment de coulisseau configuré comme piste d'actionnement du ou des commutateurs (22) par le fait qu'en au moins une position prédéterminée de la distance entre les bords périphériques extérieurs des saillies (23), les saillies entrent en contact avec une partie du commutateur.

4. Eolienne selon l'une quelconque des revendications précédentes,
**caractérisée par** un deuxième segment de coulisseau (20) qui entoure complètement l'arbre d'actionnement (16).

5. Eolienne selon l'une quelconque des revendications précédentes,
**caractérisée par** une pluralité de commutateurs (22) disposés dans la direction de déplacement et/ou le long de la longueur du deuxième segment de coulisseau (20).

6. Eolienne selon l'une quelconque des revendications précédentes,
**caractérisée par** plusieurs pistes d'actionnement de plusieurs commutateurs (22) disposées les unes à côté des autres sur la longueur du deuxième segment de coulisseau (20).

7. Eolienne selon l'une quelconque des revendications précédentes,
**caractérisée en ce qu'**au moins un commutateur (22) est un commutateur électronique.

8. Eolienne selon l'une quelconque des revendications précédentes,
**caractérisée par** une première plaque de support (21) placée sur la plaque de base (10) et qui porte le ou les commutateurs (22).

9. Eolienne selon l'une quelconque des revendications précédentes,
**caractérisée par** un détecteur de rotation (26) actionné au moyen de l'arbre d'actionnement (16).

10. Eolienne selon la revendication 9,
**caractérisée par** un arbre commun (16) pour le coulisseau (19, 20) et le détecteur de rotation (26).

11. Eolienne selon l'une quelconque des revendications 9 à 10,
**caractérisée en ce que** le détecteur de rotation (26) est configuré comme détecteur incrémentiel ou comme potentiomètre.

12. Eolienne selon l'une quelconque des revendications précédentes,
**caractérisée par** un guidage de l'arbre d'actionnement (16) à travers la plaque de base (10) avec un palier (32).

13. Eolienne selon l'une quelconque des revendications précédentes, **caractérisée par** une résistance chauffante (34) disposée à l'intérieur de l'espace intérieur du dispositif de commutation formé par la plaque de base (10) et un capot de recouvrement (36).

14. Eolienne selon la revendication 1,
**caractérisée par** un rotor avec au moins une pale de rotor, le dispositif de commutation étant configuré pour réguler un pas de la pale de rotor.

15. Eolienne selon la revendication 14,
**caractérisée en ce que** l'arbre d'actionnement (16) du dispositif de commutation est couplé à la pale de rotor des fins de régulation du pas de sorte qu'une variation du pas de la pale de rotor provoque une rotation de l'arbre d'actionnement (16).

16. Eolienne selon la revendication 14 ou 15,
**caractérisée par** une régulation du pas qui présente, comme organe de mesure, le dispositif de commutation (2) et qui est configurée pour réguler le pas de la pale de rotor.

17. Eolienne selon la revendication 16,
**caractérisée en ce que** la régulation du pas présente un régulateur (6) et, comme organe de réglage, un entraînement (4) de réglage du pas.
